# EUROPEAN PATENT APPLICATION

(11) **EP 3 933 597 A1**
(43) Date of publication of application: **05.01.2022**
(21) Application number: 20382584.9
(22) Date of filing: 30.06.2020
(51) Int. Cl.: G06F 11/34, G06F 11/36

(54) **CODE FLOW TRACE COMPRESSION EMPLOYING BRANCH PREDICTION FOR IMPLICIT CODE FLOW DATA ENCODING IN A PROCESSOR**

(71) Applicant: Microsoft Technology Licensing, LLC, Redmond, WA 98052-6399 (US)
(72) Inventor: GAGO ALONSO, Julio, Redmond, WA 9805 5311 (US); MOLA, Jordi, Bellevue, WA Washington 98052 (US)
(74) Representative: CMS Cameron McKenna Nabarro Olswang LLP

(57) **Abstract**

Code flow trace compression employing branch prediction for implicit code flow data encoding in a processor is disclosed. The processor includes a code trace circuit configured to record code trace data of executed instructions from a program code for analysis and/or debugging purposes. To reduce memory space consumed by the code trace data, the processor includes a code flow branch prediction circuit configured to predict the branch behavior of executed branch instructions having an execution determinable branch behavior that is not determinable until execution. If the predicted branch behavior of the branch instruction and the actual resolution of branch behavior of the branch instruction from its execution do not match, the code trace data record circuit records the branch behavior for the branch instruction in the recorded code trace data. In this manner, only branch behavior of mispredicted branch instructions are recorded in recorded code trace data to conserve memory.

## Description

### Field of the Disclosure

The technology of the disclosure relates generally to execution of computer software instructions ("code") of a software program in a processor, and more particularly to performing code tracing for the executed instructions in the processor for debugging and execution analysis purposes.

### Background

Microprocessors, also known as "processors," perform computational tasks for a wide variety of applications. A conventional microprocessor includes a central processing unit (CPU) that includes one or more processor cores, also known as "CPU cores." The CPU executes computer program instructions ("instructions"), also known as "instructions" or "code," to perform operations based on data and generate a result, which is a produced value. An instruction that generates a produced value is a "producer" instruction. The produced value may then be stored in memory, provided as an output to an input/output ("I/O") device, or made available (i.e., communicated) as an input value to another "consumer" instruction executed by the CPU, as examples.

It is important to be able to inspect the execution of code in a program code in a processor in detail to detect program code bugs and errors to increase reliability, performance, and security. For example, this inspection can be used to detect and debug errors in the program code that cause unintended operation in the processor. In this regard, a code tracing mechanism can be included in a processor. Code tracing involves the use of real-time logging to record code trace data in real-time about a program code's execution in the processor. The captured code trace data can include code data that includes current architectural state or context of the processor, which may include the state of registers. The captured code trace data can also include code flow data indicating the flow of instructions executed by the processor, such as the result of execution of a branch instruction. For conditional branch instructions, the code flow data includes information as to whether the branch was taken or not taken, as well as the branch address for indirect branch instructions. The captured code trace data allows the recreation of the executed program code in the processor later in an "after the fact" analysis to analyze how the instructions in the program code were executed. Thus, code tracing is superior to post mortem analysis that may only allow inspection of the architectural state of the processor at one particular time when an event of interest occurred, such as an exception. The code tracing mechanism can be a software mechanism that is, for example, built into an operation system executing on the processor. The code tracing mechanism can also be a hardware circuit that is hardware-assisted and uses hardware hooks to capture information about the state of the processor as the code is executed uninterrupted to minimize interference to execution of the code in the processor.

A large amount of code trace data is captured in hardware-assisted code tracing, because the code trace data is being captured for every instruction executed. Code flow data is also captured for conditional branch instructions. Thus, the memory that is used to store the captured code trace data must be sized according to the desired capability to look back and trace the program code execution in the processor. For example, the memory used to the store code trace data may be a partitioned memory space in a main memory of the processor. It may be desired to minimize memory space consumed in memory to store code trace data to maximize memory utilization (i.e., the code trace footprint in memory). Minimizing the memory space for storing code trace data is not only desirable to minimize memory utilization, but also to reduce the memory bandwidth consumed by the processor to store the code trace data. Code trace data to be written to memory may be asserted on the same memory bus as is used to perform memory access requests in response to execution of the program code by the processor. Thus, the code trace data could impact memory bus bandwidth in a way that also affects the general performance of the processor.

### Summary

Exemplary aspects disclosed herein include code flow trace compression employing branch prediction for implicit code flow data encoding in a processor. Related methods and computer-readable media are also disclosed. The processor is included in a processor-based system that includes memory for storing data and accessing store data. The processor includes an instruction processing circuit that is configured to fetch, decode, and execute computer instructions ("instructions") from program code as part of an instruction stream. The processor includes a code trace data record circuit that is configured to record code trace data in memory about the instructions executed in the instruction stream. The recorded code trace data includes code flow data regarding the instruction flow paths taken in the execution of the instruction stream from the program code. The recorded code trace data can be analyzed to detect and/or debug program code bugs and errors in the program code. Thus, to use the recorded code trace data to analyze and replay the program code in the order of execution, the code trace data record circuit needs to include the resolved branch behavior (e.g., branch taken for a conditional branch instruction) for executed branch instructions that have an execution determinable branch behavior that is not determinable (i.e.., not resolvable) until the branch instruction is executed. This is because the branch behavior for such branch instructions is not available simply from replaying such branch instructions from the information in the program code itself. For example, conditional branch instructions have an execution determinable branch behavior in that they have a predicate condition that is indeterminable before and resolved at execution to resolve the branch as taken or not taken. As another example, indirect branch instructions have an execution determinable branch behavior in that they specify an indirect branch target address that is indeterminable before and resolved at execution.

Thus, in exemplary aspects disclosed herein, to reduce the memory space consumed by the code trace data recorded in memory in the processor-based system, the processor includes a code flow branch prediction circuit. The code flow branch prediction circuit is configured to predict the branch behavior of executed branch instructions having an execution determinable branch behavior that is not determinable until execution. For example, if the branch instruction is a conditional branch instruction, the code flow branch prediction circuit can be configured to predict the outcome of a predicate condition of the conditional branch instruction (e.g., taken or not taken) as the predicted branch behavior. As another example, if the branch instruction is an indirect branch instruction, the code flow branch prediction circuit can be configured to predict the outcome of an indirect address of the indirect branch instruction as the predicted branch behavior. The code flow branch prediction circuit can also be configured to predict both a predicate condition and an indirect address of a conditional, indirect branch instruction as the predicted branch behavior. The code trace data record circuit is configured to compare the predicted branch behavior for the branch instruction generated by the code flow branch prediction circuit to the resolved branch behavior of the branch instruction from its execution. If the predicted branch behavior and the resolved branch behavior for the branch instruction match, the code trace data record circuit does not record resolved branch information for the resolved branch behavior for the branch instruction in the code flow data of the recorded code trace data. If, however, the predicted branch behavior and the resolution branch behavior of the branch instruction do not match, the code trace data record circuit records the resolved branch information for the resolved branch prediction in the code flow data for the branch instruction in the code trace data. In this manner, only the resolved branch information of the mispredicted branch instructions by the code flow branch prediction circuit are recorded in the code flow data to compress the code flow data in the recorded code trace data to conserve memory.

The resolved branch information for the resolved branch behavior that is not recorded for a branch instruction is implicitly encoded in the code trace data, because a device or system used to replay and analyze the code trace data can be provided with the same prediction abilities of the code flow branch prediction circuit in the processor. The same branch prediction outcome can be generated for branch instructions that have an execution determinable branch behavior in a replay of the program code as was originally generated by the code flow branch prediction circuit when executed in the processor. Thus, this same branch prediction outcome can be used to determine the resolved branch behavior of the branch instruction when the branch instruction was executed by the processor as a form of decompressing the code flow data. For example, the resolved branch behavior of a conditional branch instruction is whether its condition predicate was resolved as branch taken or branch not taken, and/or its source address. As another example, the resolved branch behavior of an indirect branch instruction can be the resolved branch target address of the branch instruction. Resolution of a conditional, indirect branch instruction can be both whether a branch is taken or not taken, and/or the resolved branch target address of the branch instruction. In this manner, the compressed code trace data can be used to replay the instructions in the program code and know which instruction flow paths were taken for the branch instructions that have execution determinable branch behavior even when the code flow data was not recorded (i.e., implicitly recorded) in the code trace data.

In this regard, in one exemplary aspect, a processor is provided. The processor includes an instruction processing circuit that includes an instruction fetch circuit configured to fetch a plurality of instructions from a program code into an instruction stream to be executed. The plurality of instructions include a branch instruction having an execution determinable branch behavior. The processor further includes an execution circuit configured to execute the branch instruction to generate a resolved branch behavior of the branch instruction. The processor is configured to predict a branch behavior of the branch instruction executed in the execution circuit to generate a predicted branch behavior for the branch instruction, determine if the resolved predicted branch behavior of the branch instruction matches the resolved branch behavior of the branch instruction. In response to the predicted branch behavior not matching the resolved branch behavior, the processor is also configured to record resolved branch information for the resolved branch behavior in a code trace data entry among a plurality of code trace data record entries in a code trace data record.

In another exemplary aspect, a method of encoding code trace data for executed instructions in a processor is provided. The method includes fetching a plurality of instructions from a program code into an instruction stream to be executed, the plurality of instructions including a branch instruction having an execution determinable branch behavior. The method further includes executing the branch instruction to generate a resolved branch behavior of the branch instruction. The method further includes predicting a branch behavior of the executed branch instruction to generate a predicted branch behavior for the branch instruction. The method further includes determining if the predicted branch behavior to generate a predicted branch behavior of the branch instruction matches the resolved branch behavior of the branch instruction. The method further includes, in response to determining the predicted branch behavior does not match the resolved branch behavior, recording resolved branch information for the resolved branch behavior in a code trace data entry for the branch instruction among a plurality of code trace data record entries in a code trace data record.

In another exemplary aspect, a non-transitory computer-readable medium is provided. The non-transitory computer-readable medium has stored thereon computer executable instructions which, when executed, cause a processor to predict a branch behavior of a branch instruction executed in the processor to generate a predicted branch behavior of the branch instruction. The computer executable instructions further cause the processor to determine if the predicted branch behavior to generate a predicted branch behavior of the branch instruction matches a resolved branch behavior of the branch instruction executed in the processor. The computer executable instructions further cause the processor to record resolved branch information for the resolved branch behavior in a code trace data entry for the branch instruction among a plurality of code trace data record entries in a code trace data record, in response to determining that the predicted branch behavior does not match the resolved branch behavior.

Those skilled in the art will appreciate the scope of the present disclosure and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the disclosure, and together with the description serve to explain the principles of the disclosure.

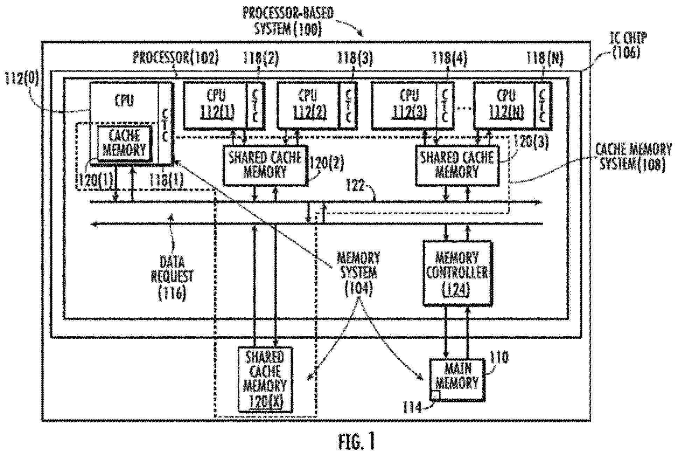

Figure 1 is a diagram of an exemplary processor-based system that includes a processor with multiple central processing unit (CPU) cores each configured to process and execute instructions fetched from memory, and each including a code trace data record circuit configured to record code flow data indicating the instruction execution flow path of an executed program code to memory;

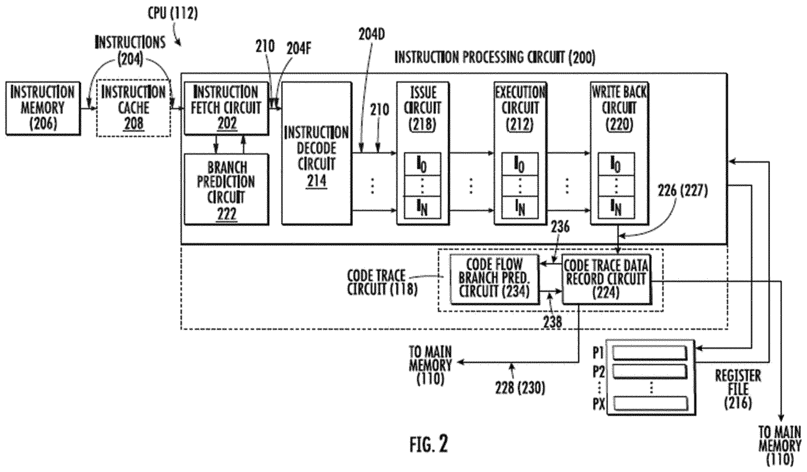

Figure 2 is a diagram of an exemplary instruction processing circuit in the processor in Figure 1 that includes one or more instruction pipelines for processing computer instructions for execution, wherein the processor includes a code trace circuit configured to predict branch behavior for branch instructions executed by the processor that have an execution determinable branch behavior, and not record resolved branch information for the resolved branch behavior in code trace data in memory for such branch instructions correctly predicted as a way to compress the code flow data in the recorded code trace data;

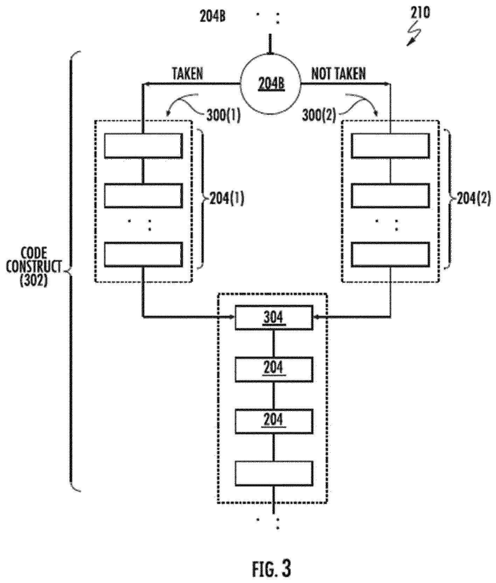

Figure 3 is an instruction stream that can be executed in the processor in Figure 2 that includes branch instructions that have an execution determinable branch behavior and instructions that are executed dependent on the instruction control flow path taken from a resolution of the branch behaviors of the branch instructions;

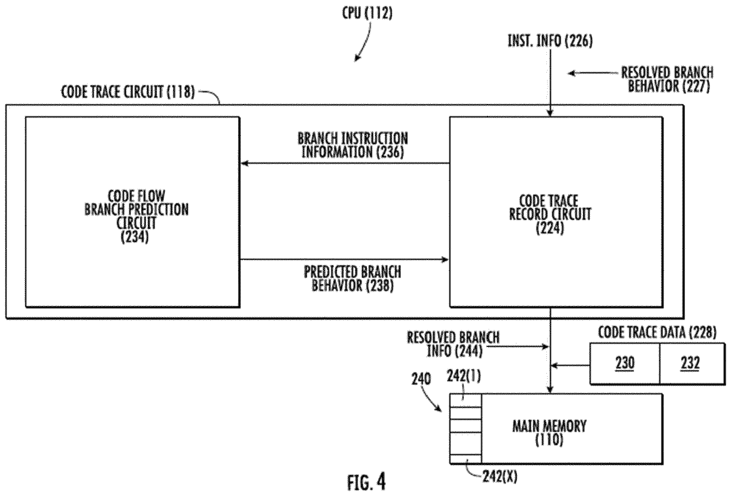

Figure 4 is a diagram illustrating additional exemplary detail of the code trace circuit in the processor in Figure 2;

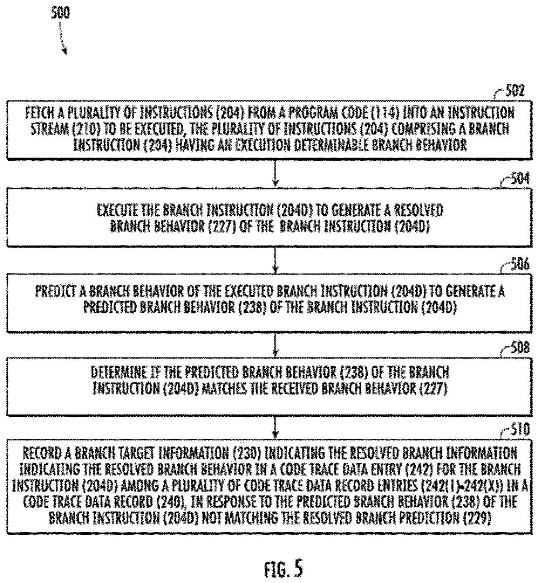

Figure 5 is a flowchart illustrating an exemplary process of predicting branch behavior for branch instructions executed by the processor that have an execution determinable branch behavior, and not recording resolved branch information for the resolved branch behavior in code trace data in memory for such branch instructions correctly predicted as a way to compress the code flow data in the recorded code trace data;

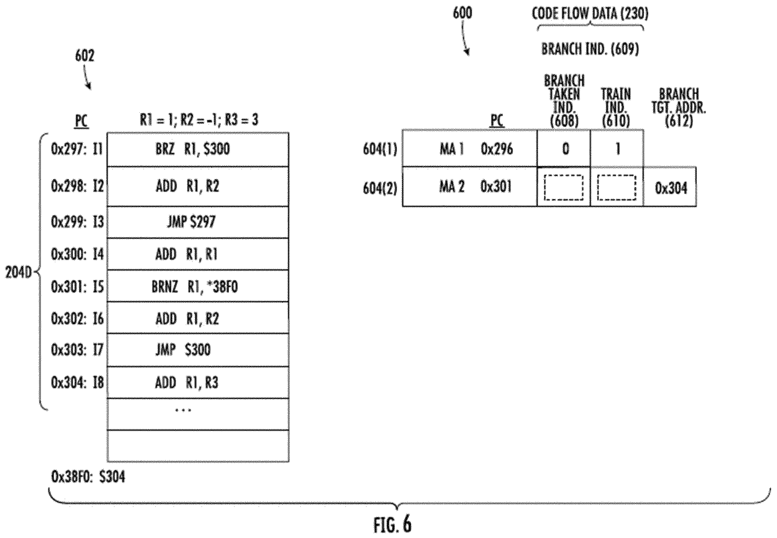

Figure 6 is a diagram of an exemplary code trace data record that includes code flow data based on recording resolved branch information for the resolved branch behavior for branch mispredictions of branch instructions having an execution determinable branch behavior, made by the code flow branch prediction circuit in Figures 2 and 4;

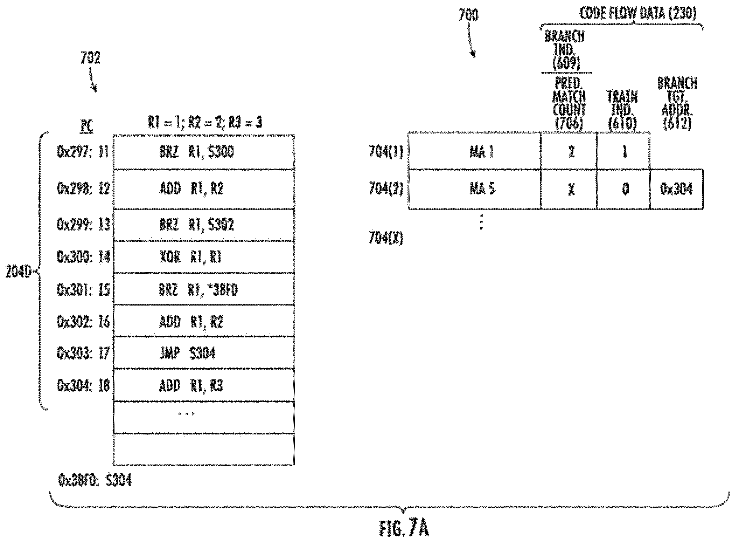

Figure 7A is a diagram of another exemplary code trace data record that includes code flow data based on recording a branch prediction match count to the next branch misprediction for a branch instruction having an execution determinable branch behavior, made by the code flow trace circuit in Figures 2 and 4;

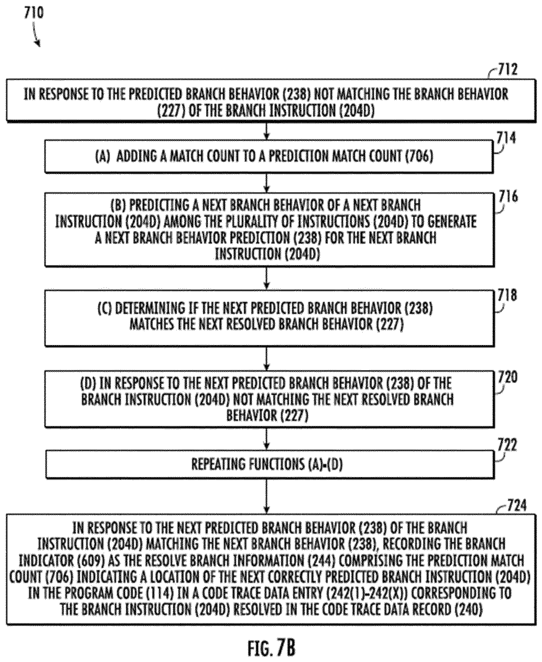

Figure 7B is a flowchart illustrating an exemplary process of a code trace circuit based on recording a branch prediction match count to the next branch misprediction for a branch instruction having an execution determinable branch behavior, such as shown in the exemplary instruction stream in Figure 7A;

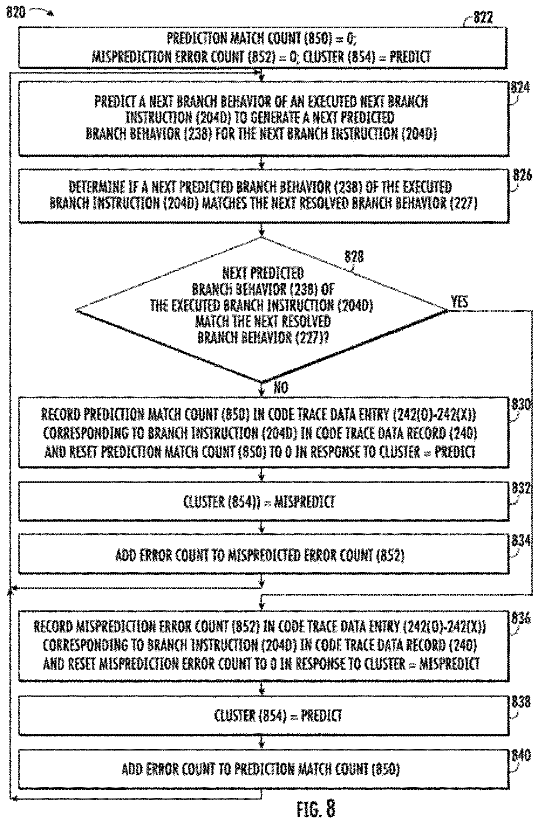

Figure 8 is a flowchart illustrating an exemplary process of a code trace circuit recording code flow data based on recording a branch prediction count to the next cluster of branch mispredictions made for clusters of branch instruction having an execution determinable branch behavior; and

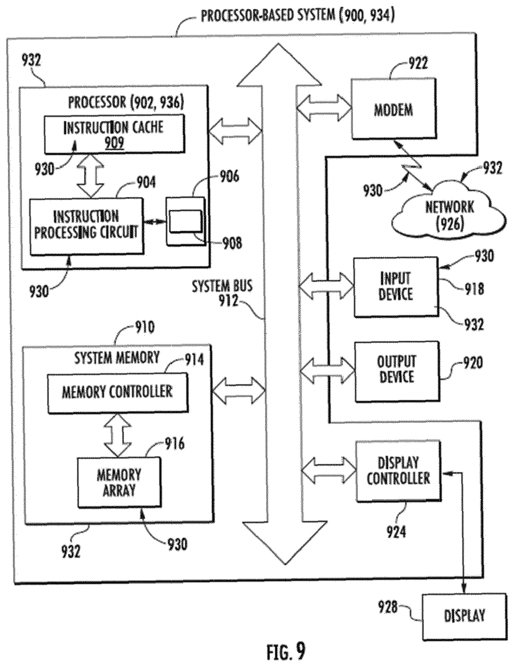

Figure 9 is a block diagram of an exemplary processor-based system that includes a processor that includes an instruction processing circuit for executing instructions from program code, and wherein the processor can include a code trace circuit, including but not limited to the code trace circuits in Figures 2 and 4, configured to predict branch behavior for branch instructions executed by the processor that have an execution determinable branch behavior, and not record the resolved branch information for the resolved branch behavior for the branch instruction correctly predicted in code trace data.

### Detailed Description

Exemplary aspects disclosed herein include code flow trace compression employing branch prediction for implicit code flow data encoding in a processor. Related methods and computer-readable media are also disclosed. The processor is included in a processor-based system that includes memory for storing data and accessing store data. The processor includes an instruction processing circuit that is configured to fetch, decode, and execute computer instructions ("instructions") from program code as part of an instruction stream. The processor includes a code trace data record circuit that is configured to record code trace data in memory about the instructions executed in the instruction stream. The recorded code trace data includes code flow data regarding the instruction flow paths taken in the execution of the instruction stream from the program code. The recorded code trace data can be analyzed to detect and/or debug program code bugs and errors in the program code. Thus, to use the recorded code trace data to analyze and replay the program code in the order of execution, the code trace data record circuit needs to include the resolved branch behavior (e.g., branch taken for a conditional branch instruction) for executed branch instructions that have an execution determinable branch behavior that is not determinable (i.e.., not resolvable) until the branch instruction is executed. This is because the branch behavior for such branch instructions is not available simply from replaying such branch instructions from the information in the program code itself. For example, conditional branch instructions have an execution determinable branch behavior in that they have a predicate condition that is indeterminable before and resolved at execution to resolve the branch as taken or not taken. As another example, indirect branch instructions have an execution determinable branch behavior in that they specify an indirect branch target address that is indeterminable before and resolved at execution.

Thus, in exemplary aspects disclosed herein, to reduce the memory space consumed by the code trace data recorded in memory in the processor-based system, the processor includes a code flow branch prediction circuit. The code flow branch prediction circuit is configured to predict the branch behavior of executed branch instructions having an execution determinable branch behavior that is not determinable until execution. For example, if the branch instruction is a conditional branch instruction, the code flow branch prediction circuit can be configured to predict the outcome of a predicate condition of the conditional branch instruction (e.g., taken or not taken) as the predicted branch behavior. As another example, if the branch instruction is an indirect branch instruction, the code flow branch prediction circuit can be configured to predict the outcome of an indirect address of the indirect branch instruction as the predicted branch behavior. The code flow branch prediction circuit can also be configured to predict both a predicate condition and an indirect address of a conditional, indirect branch instruction as the predicted branch behavior. The code trace data record circuit is configured to compare the predicted branch behavior for the branch instruction generated by the code flow branch prediction circuit to the resolved branch behavior of the branch instruction from its execution. If the predicted branch behavior and the resolved branch behavior for the branch instruction match, the code trace data record circuit does not record resolved branch information for the resolved branch behavior for the branch instruction in the code flow data of the recorded code trace data. If, however, the predicted branch behavior and the resolution branch behavior of the branch instruction do not match, the code trace data record circuit records the resolved branch information for the resolved branch prediction in the code flow data entry for the branch instruction in the code trace data. In this manner, only the resolved branch information of the mispredicted branch instructions by the code flow branch prediction circuit are recorded in the code flow data to compress the code flow data in the recorded code trace data to conserve memory.

In this regard, Figure 1 is a diagram of an exemplary processor-based system 100 that includes a processor 102 configured to issue memory requests (i.e., data read and data write requests) to a memory system 104. The processor 102 can be packaged in an integrated circuit (IC) chip 106. The memory system 104 includes a cache memory system 108 and a main memory 110. The main memory 110 is a memory that is fully addressable by the physical address space of the processor-based system 100. For example, the main memory 110 may be a dynamic random access memory (DRAM) provided in a separate DRAM chip. The processor 102 includes one or more respective CPUs 112(0)-112(N), also known as "processor cores", and may generally be referred to individually as "CPU 112," wherein 'N' is a positive whole number representing the number of CPUs 112(0)-112(N) included in the processor 102. The CPUs 112(0)-112(N) are configured to execute instructions from a program code 114. For example, the program code 114 may be stored in the main memory 110. Certain instructions executed by the CPUs 112(0)-112(N) cause the CPUs 112(0)-112(N) to issue data requests 116 in the form of memory read accesses from and memory write accesses to the memory system 104.

As discussed in more detail below, the processor 102, and more particularly the CPUs 112(0)-112(N), include a code trace circuit (CTC) 118(1)-118(N) each configured to record code flow data indicating the instruction execution flow path of an executed program code 114 to the memory system 104. The code trace circuits 118(1)-118(N) may be referred to individually as "code trace circuit 118." The code trace circuits 118(1)-118(N) are each configured to record code trace data in the memory system 104 about the instructions executed in an instruction stream from the program code 114. For example, the recorded code trace data can include code flow data regarding the instruction flow paths taken in the execution of an instruction stream of instructions fetched from a program code 114. The recorded code trace data can also include code data that indicates an architectural state of the CPU 112(0)-112(N) that existed at the time relevant to each executed instruction was executed. The recorded code trace data can be analyzed to, for example, detect and/or debug program code bugs and errors in the program code 114.

As also discussed in more detail below, to reduce the memory space consumed by the code trace data recorded in the memory system 104 of the processor-based system 100 in Figure 1, the CPUs 112(0)-112(N) are also configured to predict the branch behavior of executed branch instructions having an execution determinable branch behavior that are fetched from the program code 114. The branch behavior is information determined by execution of the branch instruction that controls the instruction flow path in the program code 114 taken from the branch instruction. A branch instruction that has an execution determinable branch behavior is a branch instruction that has a branch behavior that is indeterminable until the branch instruction is executed. For example, if the branch instruction having an execution determinable branch behavior is a conditional branch instruction, its resolved branch behavior is the resolution (i.e., outcome) of a predicate condition of the conditional branch instruction as either taken or not taken. The resolved branch behavior about a conditional branch instruction is information that indicates if the branch was taken or not taken from execution of the conditional branch instruction. As another example, if the branch instruction having an execution determinable branch behavior is an indirect branch instruction, the resolved branch behavior is a branch target address for the indirect branch instruction determined by the resolution of an indirect address of the indirect branch instruction. The resolved branch behavior about an indirect branch instruction is information that indicates the branch target address. The resolved branch behavior can also be information about the resolution of both a predicate condition and an indirect address for a branch instruction that is both conditional and indirect. Direct, unconditional branch instructions have a branch behavior that is determinable before execution and thus it may not be necessary to record code flow data for direct, unconditional branch instructions. The resolved branch behavior of direct, unconditional branch instructions can be determined based on the program code 114 itself without the need for resolving a branch behavior in execution.

The code trace circuits 118(1)-118(N) are each configured to compare a predicted branch behavior for an executed branch instruction having an execution determinable branch behavior to the actual resolved branch behavior of the branch instruction from its execution. If the predicted branch behavior of the branch instruction matches the actual resolved branch behavior from execution of the branch instruction, the code trace circuits 118(1)-118(N) do not record the resolved branch information for the resolved branch behavior in the code flow data for the branch instruction in the recorded code trace data. If, however, the predicted branch behavior for the branch instruction having an execution determinable branch behavior and the resolved branch behavior from the branch instruction being executed do not match, the code trace circuits 118(1)-118(N) record the resolved branch information for the resolved branch behavior in the code flow data for the branch instruction in the code trace data. In this manner, only resolved branch behavior of mispredicted branch instructions having an execution determinable branch behavior are recorded by the code trace circuits 118(1)-118(N) to compress the code flow data in the recorded code trace data to conserve memory space in the memory system 104. Information may also need to be recorded as part of the branch behavior to identify the branch instruction in the program code 114 to which the resolved branch information for the resolved branch behavior is recorded. Resolved branch information for the resolved branch behavior not recorded in the code trace data for a branch instruction having an execution determinable branch behavior is "implicitly" encoded in the code trace data, because a device or system, such as a debugger, used to replay and analyze the code trace data when analyzing the previous execution of the program code 114 can be provided with the same prediction abilities for branch instructions having an execution determinable branch behavior made by code trace circuits 118(0)-118(N) of the CPUs 112(0)-112(N). The same predicted branch behavior can be generated for branch instructions having an execution determinable branch behavior in a replay of the program code 114 as was originally generated by the CPUs 112(0)-112(N) when executed. Thus, this same predicted branch behavior can be used to determine the resolved branch behavior that controlled the instruction flow path resulting from the execution of the branch instruction by the CPUs 112(0)-112(N) as a form of decompressing the code flow data.

With continuing reference to Figure 1, the processor-based system 100 also includes the cache memory system 108 that includes one or more cache memories 120(1)-120(X) that may be at different hierarchies in the processor-based system 100. The number of cache memories 120(0)-120(X) is 'X+1", where 'X' is a positive whole number. The cache memories 120(1)-120(X) are logically located in and/or between the CPUs 112(0)-112(N) and the main memory 110. In the event of the data request 116 issued by a CPU 112(0)-112(N) to each of the cache memories 120(1)-120(X) within its access capability results in a cache miss, the CPU 112(0)-112(N) is configured to issue the data request 116 on a memory bus 122 to a memory controller 124 that controls access to the main memory 110.

Figure 2 is a schematic diagram of an exemplary instruction processing circuit 200 in a CPU 112 in the processor 102 in Figure 1 to illustrate further exemplary detail of execution of instructions and its code trace circuit 118 that is configured to record code trace data in the memory system 104 about the instructions executed in an instruction stream from a program code 114. In this regard, the exemplary instruction processing circuit 200 that is shown in Figure 2 for CPU 112 may be an out-of-order processor as an example. The instruction processing circuit 200 includes an instruction fetch circuit 202 that is configured to fetch instructions 204 from an instruction memory 206. The instruction memory 206 may be provided in or as part of the main memory 110 in the processor-based system 100 in Figure 1 as an example. An instruction cache 208 may also be provided in the CPU 112 to cache the instructions 204 fetched from the instruction memory 206 to reduce timing delay in the instruction fetch circuit 202. The instruction fetch circuit 202 in this example is configured to provide the instructions 204 as fetched instructions 204F into the one or more instruction pipelines I₀-I_{N} as an instruction stream 210 in the instruction processing circuit 200 to be pre-processed, before the fetched instructions 204F reach the execution circuit 212 to be executed. The instruction processing circuit 200 also includes an instruction decode circuit 214 configured to decode the fetched instructions 204F fetched by the instruction fetch circuit 202 into decoded instructions 204D to determine the instruction type and action required. The instruction type and action required encoded in the decoded instruction 204D may also be used to determine into which instruction pipeline I₀-I_{N} the decoded instructions 204D should be placed.

With continuing reference to Figure 2, in this example, the decoded instructions 204D are placed in one or more of the instruction pipelines I₀-I_{N} of the instruction processing circuit 200. The number of architectural registers provided in the CPU 112 may be limited. In this regard, the instruction processing circuit 200 is configured to access available physical register names in a register file 216 that typically provides more registers than architectural registers available. An issue circuit 218 dispatches decoded instructions 204D when ready (i.e., when their source operands are available) in an instruction pipeline I₀-I_{N} in the execution circuit 212 after identifying and arbitrating among decoded instructions 204D that have all their source operations ready. A write-back circuit 220 is also provided in the instruction processing circuit 200 as a final stage configured to update the architectural and memory state of a processor for executed instructions 204D and to process exceptions caused by the executed instructions 204D.

Certain instructions 204 have branch behaviors that, when resolved in execution, control the instruction flow path of instructions 204 fetched into the instruction stream 210 to be executed. For example, Figure 3 illustrates a conditional branch instruction 204B in a code construct 302 that can be processed by the instruction processing circuit 200 in the CPU 112 in Figure 2. For example, the conditional branch instruction 204B may be an "if" statement as part of a code construct 302 that is an "if-then-else" code construct. The conditional branch instruction 204B indicates a branch target address that controls instruction control flow path of the fetched instructions 204F into the instruction stream 210 to be processed based on the outcome of its predicate condition. A predicate condition outcome of "branch taken" causes a next instruction 204 to be fetched for execution at specified target branch address in the conditional branch instruction. A predicate condition outcome of "branch not taken" causes a next instruction 204 to be fetched for execution following the conditional branch instruction 204. Thus, as shown in Figure 3, the instruction execution flow path in the instruction stream 210 either takes the branch taken flow path 300(1) or branch not taken flow path 300(2) depending on the resolution of the condition (i.e., predicate) in the conditional branch instruction 204B as either branch taken or branch not taken. Instructions 204(1), 204(2) are fetched into the instruction stream 210 from a respective branch taken flow path 300(1) or branch not taken flow path 300(2) to be executed depending on whether the resolution of the predicate of the conditional branch instruction 204B is taken or not taken. The branch taken flow path 300(1) or branch not taken flow path 300(2) converge back at a convergence point 304 in the program code 114 where other instructions 204 are present that get fetched and executed regardless of which branch not taken flow path 300(1), 300(2) is taken as a result from the conditional branch instruction 204B.

With reference back to Figure 2, to allow instructions 204 to continue to be fetched by the instruction fetch circuit 202 without having to wait for the predicate of the conditional branch instruction 204B in Figure 3, for example, to be resolved in the execution circuit 212, the instruction processing circuit 200 also includes a branch prediction circuit 222. The branch prediction circuit 222 is configured to speculate or predict the outcome of a predicate condition of a fetched branch control instruction 204F before its execution in the execution circuit 212. The instruction fetch circuit 202 uses the prediction of the predicate condition (i.e., as branch "taken" or branch "not taken") of a conditional branch instruction 204 to determine next instructions 204 to fetch without having to wait for the conditional branch instruction 204 to be executed to avoid or reduce stalls in the instruction pipelines I₀-I_{N}. If it is determined at the execution circuit 212 that the fetched conditional branch instruction 204F was mispredicted, the instruction pipelines I₀-I_{N} may have to be flushed and the instruction fetch circuit 202 fetch new instructions 204 following the fetched conditional branch instruction 204F according to the resolved predicate condition.

It may be important to be able to inspect the execution of the instructions 204 of the program code 114 in the CPU 112 in Figure 2 in detail to detect program code bugs and errors to increase reliability, performance, and security. In this regard, the code trace circuit 118 in the CPU 112 in Figure 2 includes a code trace data record circuit 224 in this example. The code trace data record circuit 224 is configured to capture executed instruction information 226 about instructions 204D executed in the instruction processing circuit 200 and record this information as code trace data 228 to main memory 110. Code tracing performed by the code trace data record circuit 224 involves the use of logging to record code trace data about a program code's execution in the CPU 112. The recorded code trace data 228 can include code flow data 230 indicating the flow (i.e., order) of instructions 204 executed by the CPU, which can vary depending on resolution conditional branch instructions as discussed above. If the executed instruction information 226 indicates a branch instruction having an execution determinable branch behavior, the resolution of the branch behavior of such branch instruction is provided as resolved branch information 227 for the resolved branch behavior. The resolved branch information 227 can be provided as part of the executed instruction information 226 in this example to include in the code flow data 230 of the code trace data 228 to indicate the instruction path flow executed by the CPU 112. The recorded captured code trace data 228 can also include code data 232 that includes the architectural state of the CPU 112 at the time a given fetched instruction 204F was executed. The architectural state of the CPU 112 can include information such as data stored in control registers and general purpose registers. The code trace data record circuit 224 is configured to record the code trace data 228 in a code trace data record 240 in main memory 110 in this example, as shown in Figure 4. The code trace data record 240 may be a partitioned part of the main memory 110 that allows for a plurality of code trace data entries 242(1)-242(X) to be recorded regarding code trace data 228 for executed instructions 204D, including conditional branch instructions 204D.

Memory that is used (e.g., the main memory 110) or partitioned to store the captured code trace data 228 must be sized according to the desired capability to store sufficient code trace data 228 to look back and trace the program code 114 execution in the CPU 112. However, it may be desired to minimize memory space consumed in memory to store code trace data 128 to maximize memory utilization (i.e., the code trace footprint in memory). Minimizing the memory space for storing code trace data 128 is not only desirable to minimize memory utilization, but also reduces the memory bandwidth consumed by the CPU 112 on the memory bus 122 in Figure 1 to store the code trace data 128 in the main memory 110, as an example. In this example, the recorded code trace data 128 is asserted on the same memory bus 122 as is used to perform memory access requests in response to execution of the program code 114 by the CPU 112. Thus, the code trace data could impact bandwidth of the memory bus 122 in a way that also affects the general performance of the CPUs 112(0)-112(N) in the processor 102 in Figure 1.

In this regard, to compress the code trace data 228 recorded by the code trace data record circuit 224 in the CPU 112 in Figure 2 to conserve memory space and memory bus bandwidth, but also properly capture the code flow path of instructions 204 in the program code 114 that are executed, the code trace circuit 118 in the CPU 112 includes a code flow branch prediction circuit 234 in this example. The code flow branch prediction circuit 234 is configured to predict the outcome of a branch behavior of branch instructions 204D executed in the instruction stream 210 by the CPU 112. As shown in Figure 2, the code trace data record circuit 224 is configured to receive instruction information 236 from the instruction processing circuit 200 about instructions 204D that have been executed. In one example, the code trace data record circuit 224 receives instruction information 236 from the instruction processing circuit 200 about instructions 204D that have been executed from the write-back circuit 220. By the time an executed instruction 204D reaches write-back circuit 220, the instruction 204D has been fully executed. If the executed instruction is a branch instruction 204D having an execution determinable branch behavior, its branch behavior has been fully resolved by the time it reaches the write-back circuit 220. Thus, the branch target of branch instruction 204D having an execution determinable branch behavior is known. For example, if the branch instruction 204D is a conditional branch instruction, its predicate condition is resolved to a branch taken or branch not taken condition in the instance of a conditional branch instruction 204D. If the branch instruction 204D is an indirect branch instruction, its branch target address to which to branch has been resolved.

If the executed instruction information 226 indicates an executed instruction 204D is not a branch instruction having an execution determinable branch behavior, the code trace data record circuit 224 may optionally be configured to generate code trace data 228, if needed, to represent the executed instruction 204D. The code trace data 228 may be generated, if needed, without need for the code flow branch prediction circuit 234 to predict the target branch information of the branch instruction 204D, as shown in Figure 4. However, if the executed instruction information 226 received by the code trace data record circuit 224 indicates that the executed instruction 204D is a branch instruction 204D having an execution determinable branch behavior, the code trace data record circuit 224 is configured to provide branch instruction information 236 about the executed branch instruction 204D to the code flow branch prediction circuit 234, as shown in Figure 4. In response, the code flow branch prediction circuit 234 is configured to predict the branch behavior of the branch instruction 204D and provide such prediction as a predicted branch behavior 238 back to the code trace data record circuit 224. The predicted branch behavior 238 can indicate a predicted branch behavior of either "taken" or "not taken" for a conditional branch instruction as an example. The predicted branch behavior 238 can indicate a predicted branch behavior as a predicted branch target address for an indirect address of an indirect branch instruction, as another example.

The code trace data record circuit 224 is then configured to compare the predicted branch behavior 238 for the branch instruction 204D generated by the code flow branch prediction circuit 234, to the resolved branch information 227 for the resolved branch behavior generated by execution of the branch instruction 204D. If the predicted branch behavior 238 of the branch instruction 204D matches the resolved branch behavior 227 generated by the execution circuit 212 of the CPU 112 as a result of executing the branch instruction 204D, the code trace data record circuit 224 does not record the resolved branch information for the resolved branch behavior of the branch instruction 204D in the code flow data 230 of the code trace data 228 recorded to the main memory 110. If, however, the predicted branch behavior 238 of the branch instruction 204D does not match the resolved branch behavior 227 by execution of the branch instruction 204D, the code trace data record circuit 224 does record the resolved branch information 244 for the resolved branch behavior 227 for the resolved branch behavior for the branch instruction 204D as resolved branch information 244 in the code flow data 230 of the code trace data 228 recorded to the main memory 110.

In this manner, only mispredicted resolved branch information 244 for the resolved branch behavior 227 of branch instructions 204D having an execution determinable branch behavior by the code flow branch prediction circuit 234 in the code trace circuit 118 are recorded in the code trace data 228 to compress the code flow data 230 in the recorded code trace data 228 to conserve memory. Thus, the code flow branch prediction circuit 234 can be thought of as a synthetic branch predictor, meaning that it is not actually used to predict the outcome of a branch instruction 204D to control fetching of instructions like branch prediction circuit 222 in Figure 2. Rather, the code flow branch prediction circuit 234 is used to determine whether to record the resolved branch information 244 for the resolved branch behavior 227 of code flow data 230 for a branch instruction 204D having an execution determinable branch behavior.

The resolved branch information 244 for the resolved branch behavior 227 for a branch instruction 204D is not explicitly recorded in the code flow data 230, but is implicitly encoded in the code flow data 230. This is because a device or system, such as a debugger, used to replay and analyze the code trace data 228 can be provided with the same prediction abilities of the code flow branch prediction circuit 234 in the code trace circuit 118 in the CPU 112. Thus, the same branch behavior prediction can be generated for branch instructions 204D having an execution determinable branch behavior in a replay of the instructions 204D in program code 114 as was originally generated by the code flow branch prediction circuit 234 when the branch instruction 204D was executed in the CPU 112. Thus, this same branch behavior prediction can be used to determine the resolved branch behavior 227 in execution of the branch instruction 204D in the CPU 112 as a form of decompressing the code flow data 230 in the code trace data 228. In this manner, the compressed code trace data 228 can be used to replay the instructions 204D in the program code 114 and know which instruction flow paths were taken for the branch instructions 204D having an execution determinable branch behavior even when the correctly predicted and resolved branch behavior 244 for such branch instructions 204D was not recorded (i.e., implicitly recorded) in the code trace data 228 by the code trace circuit 118.

The amount of compression in the code flow data 230 that can be realized is a function of the branch prediction accuracy of the branch prediction circuit 234. For the sake of example, if execution of the program code 114 caused the CPU 112 to evaluate 1 million conditional branches in a row, one (1) bit of information may be encoded in code flow data 230 to indicate a resolved branch behavior 244 of branch taken or branch not taken without compression if the branch prediction circuit 234 were not employed. For example, loops in the program code 114 may cause a number of conditional branches to be executed by the CPU 112. However, if the branch prediction circuit 234 is employed to predict the branch behavior of the 1 million conditional branches, and the branch prediction circuit 234 has an accuracy of 99%, for example, only 10,000 bits would be needed to explicitly encode a resolved branch behavior 244 of branch taken or branch not taken in the code flow data 230 in response to condition branch mispredictions, instead of 1 million bits. However, additional bits may need to be recorded in the code flow data 230 for such mispredictions to correlate the encoded conditional branch mispredictions with a particular instance of a branch instruction 204D in the program code 114. Even so, the resolved branch behavior 244 recorded in the code flow data 230 may be much smaller in bit size, and thus compressed, than recording information for all 1 million conditional branches. For instance, for every 10,000 instructions 204D, the number of well predicted branch instructions 204D encoded in the code flow data 230 before a branch misprediction can be represented by log₂ (10,000 bits). Thus in total, 10,000 x log₂ (99) bits is approximately 70,000 bits rounded (or more depending on the design), which is much less than 1 million bits. If instead, for example, the branch prediction circuit 234 has an accuracy of 99.9%, in total, this could equate to 1,000 x log₂ (999) bits of encoding, which is approximately 10,000 bits (or more depending on the design), which is much less than 1 million bits. If, for example, the branch prediction circuit 234 has an accuracy of 99.99%, in total, this could equate to 100 x log₂ (9999) bits of encoding, which is approximately 1,400 bits (or more depending on the design), which is much less than 1 million bits.

Another advantage of the implicit code flow data encoding scheme discussed above is that the code flow branch prediction circuit 234 in Figures 2 and 4 is not the traditional branch prediction circuit used to predict conditional branches at the fetch or decode stages before execution for prefetching instructions 204, like branch prediction circuit 222 in the processor 102 in Figure 2. The code flow branch prediction circuit 234 in Figures 2 and 4 can be provided as a separate circuit and with a separate algorithm to predict predicate conditions of conditional branch instructions. This allows the algorithm used in the branch prediction circuit 222, for example, to be kept secret, because in this implicit code flow data encoding scheme, another analysis device must have access to the same prediction scheme as employed in the code flow branch prediction circuit 234 so that the same prediction results are achieved for conditional branch instructions executed by the CPU 112 and analyzed in the other analysis device. This means that the branch prediction algorithm employed in the code flow branch prediction circuit 234 can be changed, and kept public with no impact on this implicit code flow data encoding scheme. It also means that this compressing branch prediction algorithm employed in the code flow branch prediction circuit 234 can have no impact on the branch prediction algorithm employed in the branch prediction circuit 222. The code flow branch prediction circuit 234 in the CPU 112 may be designed to be simpler in complexity and hardware circuit resources than the branch prediction circuit 222 in the CPU 112. For example, the code flow branch prediction circuit 234 could be as simple as always predicting "taken" or "not taken."

Note that the code flow branch prediction circuit 234 and the code trace data record circuit 224 in the code trace circuit 118 do not have to be provided as separate circuits, but could be provided as one integrated circuit in the code trace circuit 118. The code trace circuit 118 and/or the code flow branch prediction circuit 234 and/or the code trace data record circuit 224 could be provided as part of the instruction processing circuit 200. Further, the code flow branch prediction circuit 234 could be provided as part of the code trace data record circuit 224. Also note that the code trace circuit 118, code trace data record circuit 224, and/or the code flow branch prediction circuit 234 could alternatively be provided off CPU 112 or off processor 102 in a separate circuit that is accessible to the CPU 112.

Figure 5 is a flowchart illustrating an exemplary process 500 of the CPU 112 in Figures 2 and 4 encoding the code trace data 228 for executed instructions. The process 500 includes the instruction processing circuit 200 in the CPU 112 in Figure 2 fetching a plurality of instructions 204 from a program code 114 into an instruction stream 210 to be executed, the plurality of instructions 204 comprising a branch instruction 204 having an execution determinable branch behavior (block 502 in Figure 5). The process also includes the instruction processing circuit 200 in Figure 2 executing the branch instruction 204D to generate a resolved branch behavior condition for the branch instruction 204D (block 504 in Figure 5). The resolved branch information 244 for the resolved branch behavior 227 for the branch instruction 204D can be provided to the code trace data record circuit 224 in Figures 2 and 4 in the instruction information 226 as previously described. The process 500 also includes the code flow branch prediction circuit 234 in Figures 2 and 4 predicting the branch behavior of the executed conditional branch instruction 204D to generate a predicted branch behavior 238 indicating a branch prediction for the branch instruction 204D (block 506 in Figure 5). The process then includes the code trace data record circuit 224 in Figures 2 and 4 determining if the predicted branch behavior 238 of the branch instruction 204D matches the resolved branch behavior 227 of the branch instruction 204D (block 508 in Figure 5). The code trace data record circuit 224 can receive the branch prediction in the predicted branch behavior 238 generated by the code flow branch prediction circuit 234 in Figures 2 and 4. The process 500 then includes recording the resolved branch information 244 for the resolved branch behavior 227 in a code trace data entry 242 for the branch instruction 204D among a plurality of code trace data entries 242(1)-242(X) in the code trace data record 240, in response to the predicted branch behavior 238 of the branch instruction 204D not matching the resolved branch behavior 227 (block 510 in Figure 5).

There are different manners and methods in which the resolved branch information 244 for the resolved branch behavior 227 of the branch instructions 204D can be recorded by the code trace data record circuit 224 in the code trace data record 240 in memory. For example, Figure 6 is a diagram of an exemplary code trace data record 600 that may have been generated by the code trace data record circuit 224 in Figures 2 and 4 in response to the instruction processing circuit 200 in Figure 2 processing and executing an instruction stream 602 of instructions. The exemplary code trace data record 600 is recorded consistently with the process 500 described above in Figure 5.

With reference to Figure 6, the instruction stream 602 includes a first instruction I1 at program counter (PC) 0x297 that is a conditional branch instruction, branch if zero (BRZ), based on whether register R1 is zero (0). As shown in Figure 6A, the starting value of register R1 when instruction I1 is executed is equal to one (1) and thus is not zero (0). Thus, no branch is taken by the instruction processing circuit 200 when executing instruction I1. The instruction information 226 provided by the instruction processing circuit 200 in Figure 2 to the code trace data record circuit 224 includes instruction information 226 that the resolved branch information 244 for the resolved branch behavior 227 for the conditional branch instruction I1 was "not taken" when executed. In response, the code trace data record circuit 224 provides the instruction I1 in the branch instruction information 236 to the code flow branch prediction circuit 234, as shown in Figure 4. The code flow branch prediction circuit 234 makes a prediction of the branch behavior of the conditional branch instruction I1 based on its predicate condition which in the example of instruction I1 is if R1 = 0. The code flow branch prediction circuit 234 then provides the predicted branch behavior 238 as "taken" or "not taken" to the code trace data record circuit 224. In response to receiving the predicted branch behavior 238, the code trace data record circuit 224 then compares the predicted branch behavior 238 to the resolved branch information 227 in the instruction information 226.

In this example of the processing of conditional branch instruction I1, the predicted branch behavior 238 made by the code flow branch prediction circuit 234 did not match the resolved branch prediction 227 for the conditional branch instruction I1 in the instruction information 226. This means that the code flow branch prediction circuit 234 mispredicted the branch behavior (in this example, the predicate condition) of the conditional branch instruction I1. Thus, as shown in the code trace data record 600 in Figure 6, the code trace data record circuit 224 is configured to record a code trace data entry 604(1) and a code flow data 230 that includes a branch taken indicator 608 as part of a branch indicator 609 that indicates the resolved branch information 244 for the resolved branch behavior 227whether the branch in conditional branch instruction I1 was "taken" or "not taken" in its execution by the instruction processing circuit 200. The branch taken indicator 608 is recorded, because the code flow branch prediction circuit 234 mispredicted the predicate condition of the conditional branch instruction I1. For example, the branch taken indicator 608 may be a single bit that is encoded as '0' for branch not taken, and '1' for branch taken. Thus, in the code trace data entry 604(1), a '0' bit is recorded in the branch taken indicator 608 as the branch of instruction I1 was "not taken." Thus, when another analysis device, such as a debugging device, analyzes the exemplary code trace data record 600 in Figure 6 to replay the instruction stream 602 in Figure 6, the branch taken indicator 608 being recorded as '0' in this instance will inform the other device that the branch was not taken when conditional branch instruction I1 was previously executed in the CPU 112 in Figure 2.

Note that there are number of different mechanisms and information that can be recorded to record a resolved branch behavior for a mispredicted branch instruction. Alternatively, or in addition, the branch behavior could be to simply record the location and identity of an instance of a mispredicted branch instruction 204D to indicate that the resolved branch behavior for the mispredicted branch instruction 204D was opposite of the prediction in the analysis device. For example, as discussed above, for a conditional branch instruction, the branch behavior for taken or not taken can be recorded. For example, in the code trace data entry 604(1) in Figure 6, a source address of branch instruction I1 as 0x297 could be recorded to identify the resolved branch behavior, meaning that the branch behavior prediction of instruction I1 by the branch prediction code flow circuit 234 in Figure 4 was incorrect for branch instruction I1. Alternatively, or in addition, a source address or program counter (PC) of the branch instruction 204D that was mispredicted can be recorded. This also has the advantage of identifying the actual branch instruction 204D that was mispredicted in the program code 114. In the case of the mispredicted branch instruction 204D being in a loop, the source address or PC of the mispredicted branch instruction 204D may not be sufficient to uniquely identify the actual instance of the mispredicted branch instruction 204D in code trace data 228. Other information, such as a counter, may need to also be included in the code trace data 234 for the mispredicted branch instruction 204D to uniquely identify the mispredicted instance of the branch instruction 204D for replay.

Thus, recording branch behavior of a mispredicted branch instruction 204D may consume more than one (1) bit of information, for example, if a source address or source address offset is recorded by the code trace data record circuit 224. If the source address is not used to record a resolved branch behavior of a mispredicted branch instruction 204D, another mechanism may be implemented to identify the location or instance of the mispredicted branch instruction 204D in the program code 114 when recording the resolved branch behavior for the mispredicted branch instruction 204D.

Also note that the branch prediction code flow circuit 234 can take different factors into consideration when predicting a branch behavior, including a branch history of a branch instruction 204D. For example, assume that the program code 114 included a loop construct that is taken at random times. If the branch prediction code flow circuit 234 makes predictions of branch behavior solely on sequences of jumps, and if the branch prediction code flow circuit 234 also takes into consideration the source address of the branch instruction 204D, the branch prediction code flow circuit 234 may more accurately predict the branch behavior. This is because the branch prediction code flow circuit 234 can take into account prior resolved branch behavior of the branch instruction 204D at the same source address or instance of branch instruction 204D in a loop.

Also note that in this example, the code trace data record 600 can include an optional training indicator 610 as part of the code flow data 230 that can be recorded in code trace data entry 604(1)-604(X) to indicate if training occurred to the code flow branch prediction circuit 234 when it mispredicted. Thus, like the branch taken indicator 608, the training indicator 610 is only recorded by the code trace data record circuit 224 on mispredictions by the code flow branch prediction circuit 234 in this example when it mispredicts a branch behavior of a branch instruction 204D recorded by the code trace data record circuit 224 in a code trace data entry 604(1)-604(X). This allows another device, such as a debugging device, that is used to analyze the execution of the instructions 204D in the instruction stream 602 to also know if its branch prediction mechanism, which is designed to match the logic of the code flow branch prediction circuit 234, also needs to be trained after analyzing a given branch instruction corresponding to the code trace data entry 604(1)-604(X) that indicates a mispredicted resolved branch behavior. This is so the branch prediction mechanism in the other analysis device will continue to generate the same branch behavior prediction results as the code flow branch prediction circuit 234 in the CPU 112 in Figure 2 so that the implicit encoding of code flow data for correctly predicted branch instructions will continue to be accurate. In the example of instruction I1 recorded in code trace data entry 604(1), a '1' bit signifying training occurred is recorded in the training indicator 610 in code trace data entry 604(1), because in this example, the code flow branch prediction circuit 234 underwent training based on the misprediction of the branch behavior of conditional branch instruction I1.

Note that the instruction stream 602 includes a loop between instructions I1 and I3 such that branch behavior of instruction I1 may get predicted multiple times before the loop is exited by register R1 being equal to '0' when instruction I1 is executed.

With continuing reference to Figure 6, for conditional branch instruction I5 at PC 0x301 in the instruction stream 602, assume that the code flow branch prediction circuit 234 also properly predicted the predicate condition of this branch instruction 15. In this example, branch instruction I5 is an indirect, conditional branch instruction that employs indirect address by naming a memory location 0x38F0 as storing the memory address of the branch target address if a branch is taken. The branch instruction I5 is an indirect branch instruction, because the context of memory location 0x38F0 can change during execution depending on whether execution of another instruction cause the value stored in memory location 0x38F0 to be overwritten. Thus, are replay device cannot simply analyze the instruction stream 602 to determine the branch target address at memory location 0x38F0 for indirect branch instruction 15. The code flow branch prediction circuit 234 is configured to predict both the predicate condition and the indirect address of branch instruction 15. Assuming the predicate condition is predicted correctly, but the indirect address is not predicted correctly, the code trace data record circuit 224 will record resolved branch information 244 that includes the resolved branch target address 0x304 as the resolved branch behavior in a code trace data entry 604(2) for branch instruction 15. Note the empty boxes in the branch taken indicator 608 and training indicator 610 in code trace data entry 604(2) as symbolically signifying that the prediction of the predicate condition branch behavior of branch instruction I5 was correct and thus no information need be recorded in the code data record 600 in this regard. In this example, the resolved branch target address 612 is PC 0x304, as shown in Figure 6. This allows another analysis device to determine the branch target address of branch instruction 15, which is 0x304 in this example.

Note that the instruction stream 602 includes a loop between instructions I5 and I7 such that branch behavior of instruction I5 may get predicted multiple times before the loop is exited.

Note that in this example, the code trace data record 600 can be allocated a certain number of code trace data entries 604(1)-604(X) in the main memory 110 as desired. The code trace data record 600 could be a circular buffer for example, where it only contains code trace data for up to 'X' instructions that were previously executed. This may be sufficient to debug or recreate an error in a program code since the "X" instructions recorded will be the "X" instructions executed before an event, such as a crash or exception. The ability of the code trace data record circuit 224 to implicitly encode code flow data 230 for conditional branch instructions can be used to store code trace data for more instructions in the code trace data record 600 or conserve memory used for the code trace data record 600.

Also, note that the accuracy of the of the code trace circuit 118 and its code flow branch prediction circuit 234 in Figures 2 and 4 of the CPU 112 will determine how much code flow compression may be achieved in the code trace data record 600 generated by the code trace data record circuit 224. Conditional branch instructions are typically highly prevalent in program code, and may be present in as much as one (1) instruction for every ten (10) instructions in program code, as an example, especially if used in loop constructs. As an example, if we assume that many compilers will place a loop condition in a conditional branch instruction upfront in program code, the compiler will encode a backwards jump back to the upfront condition after the body of the loop. Using the implicit code flow encoding scheme discussed herein, it can be predicted that if the loop condition is taken once, it will be taken several more times. This translates into the code trace data record circuit 224 being able to skip the branch taken indicator 608 in a given code trace data entry, stating that the conditional branch instruction is taken in exchange for eventually being able to detect that the conditional branch instruction was wrong.

For example, by adding the count of times the branch prediction of a conditional branch instruction 204D was correctly predicted, another analysis device that replays the program code 114 based on the code trace data record 240 can know how many bits are missing from the code trace data record 240. Also note that if a key frame takes place while the code flow branch prediction circuit 234 is still predicting correctly, there is no need for extra data to be added to the code trace data record 240. Note that the space cost of storing the information for code trace data 228 for 'N' iterations of a loop body in the program code 114 in the encoding scheme in Figure 6 is 'N.' But, if a count of correct branch predictions were kept instead, information storage in the code trace data record 240 for code trace data 228 interactions is log2(N), which consumes less memory space.

In this regard, Figure 7A is a diagram of another exemplary code trace data record 700 that may have been generated by the code trace data record circuit 224 in Figures 2 and 4 in response to the instruction processing circuit 200 in Figure 2 processing and executing an instruction stream 702 of instructions. And in this example, the code trace data record circuit 224 is configured to implicitly encode code flow data 230 by only having to record a count value until the next correctly predicted conditional branch instruction, as opposed to having to record a code trace data entry for each instruction in the instruction stream 702 for greater code trace data record compression. For example, as shown in Figure 7A, assume the predicted branch behavior made by the code flow branch prediction circuit 234 for branch instruction I1 did not match the resolved branch information 227 in the instruction information 226 for executed branch instruction I1. Thus, the code trace data record circuit 224 will record the code flow data 230 in a code trace data entry 704(1). However, in this example, a prediction match count 706 is recorded as the resolved branch indicator 609 in the code trace data entry 704(1), which is '2' in this example, instead of a branch taken indicator 608 in Figure 6. The prediction match count 706 is a form of a branch indicator 609 that encodes if a branch was taken or not for the conditional branch instruction I1. A prediction match count 706 of '2' in the code trace data entry 704(1) means that not only was there a misprediction by the code flow branch prediction circuit 234 for conditional branch instruction I1 when executed, but also that the next misprediction by the code flow branch prediction circuit 234 for a conditional branch instruction is the second conditional branch instruction that follows conditional branch instruction I1 in the instruction stream 702. This is conditional branch instruction I5 in this example, because indirect branch instruction I3 was not mispredicted. The code trace data record circuit 224 will also record a prediction match count 706 in the code trace data entry 704(2) for conditional branch instruction 15, indicating the next conditional branch instruction in the instruction stream 702 that was mispredicted by the code flow branch prediction circuit 234. The prediction match count 706 may be incremented or decremented to indicate encountered mispredicted conditional branch instructions.

Under this alternative prediction match count scheme that can be employed by the code trace data record circuit 224 as shown in Figure 7A, the code trace data record circuit 224 is configured to generate the code trace data entry 704(1) only after a misprediction of the branch behavior of a branch instruction 204D by the code flow branch prediction circuit 234 occurs. This is so that it can be known how many intervening branch instructions were predicted correctly by the code flow branch prediction circuit 234. That counter can then be used to record the prediction match count 706 in a next code trace data entry 704(1)-704(X) in the code trace data record 700 for a conditional branch instruction that was mispredicted. Using the alternative prediction match count recording scheme can further increase compression of the code flow data 230 in the code trace data 228.

Figure 7B is a flowchart illustrating an exemplary process 710 of the code trace data record circuit 224 in Figures 2 and 4 recording code flow data 230 based on the prediction match count recording scheme described by example in Figure 7A. The process 710 involves recording a prediction match count 706 to the next correctly made branch prediction for a branch instruction 204D like shown in Figure 7B. In this regard, the blocks 502-506 in the process 500 in Figure 5 can be performed as previously described therein. Then, as shown in process 710 in Figure 7B, in response to the predicted branch behavior 238 of the executed branch instruction 204D not matching the resolved branch information 244 for the resolved branch behavior 227 of the executed branch instruction 204D (block 712in Figure 7B), the code trace data record circuit 224 then (A) adds a match count to the prediction match count 706 for code trace data 228 to be recorded like shown in Figure 7A (block 714 in Figure 7B). The code flow branch prediction circuit 234 then (B) predicts a next branch behavior of a next branch instruction 204D among the plurality of instructions 204D to generate a next predicted branch behavior 238 indicating a next branch prediction for the next branch instruction 204D (block 716 in Figure 7B). The code trace data record circuit 224 (C) determines if the next resolved branch behavior 227 of the next branch instruction 204D matches the next predicted branch behavior 238 for the next branch instruction 204D (block 718 in Figure 7B). Then, (D) in response to the next predicted branch behavior 238 of the next branch instruction 204D not matching the next resolved branch behavior 227 for the next branch instruction 204D (block 720 in Figure 7B, functions (A)-(D) in blocks 714-720 are repeated (block 722 in Figure 7B) until another next branch instruction 204D is correctly predicted (block 724 in Figure 7B). Thus, the code trace data record circuit 224 continues to increase the prediction match count 616 until a correctly predicted branch instruction 204D is found.

If it is determined in block 724 that the next predicted branch behavior 238 of a next branch instruction 204D matches the next resolved branch behavior 227 for the next branch instruction 204D, the code trace data record circuit 224 records the branch indicator 609 as the branch behavior of the current prediction match count 706, indicating a location of the next correctly predicted branch instruction 204D in the program code 114 in a code trace data entry 242(1)-242(X) corresponding to the branch instruction 204D in the code trace data record 240 (block 724 in Figure 7B).

Figure 8 is a flowchart illustrating an exemplary process 820 of the code trace data record circuit 224 in Figures 2 and 4 recording code flow data 230 based on tracking and recording clusters of predicted branch instructions 204D and mispredicted branch instructions 204D as part of a cluster recording scheme. A cluster of predicted branch instructions 204D is a number of consecutive correctly predicted branch instructions 204D. A cluster of mispredicted branch instructions 204D is a number of consecutive mispredicted branch instructions 204D. This can provide even greater compression of the code flow data 230. Note that in a cluster prediction scheme, single or small clusters of predicted branch instructions 204D and mispredicted branch instructions 204D may not result in actual code flow data 230 compression. However, larger clusters of predicted branch instructions 204D and mispredicted branch instructions 204D may result in significant code flow data 230 compression.

In this regard, as illustrated in Figure 8, the process 820 includes initializing a prediction match count 850 and misprediction error count 852 to zero (0) (block 822 in Figure 8). A cluster indicator 854 is also initialized to a predict state in this example (block 822 in Figure 8). The prediction match count 850 is a running total of a number of consecutive correctly predicted branch instructions 204D. The misprediction error count 852 is a running total of a number of consecutive mispredicted branch instructions 204D. The process 820 then includes the code flow branch prediction circuit 234 predicting a next branch behavior of an executed next branch instruction 204D among the plurality of instructions 204D to generate a next predicted branch behavior 238 for the next branch instruction 204D (block 824 in Figure 8). The code trace data record circuit 224 determines if the next predicted branch behavior 238 of the executed next branch instruction 204D matches the next resolved branch behavior 227 of the next branch instruction 204D (block 826 in Figure 8).

Then, if the next predicted branch behavior 238 of the executed next branch instruction 204D does not match the resolved branch behavior 227 (block 828 in Figure 8), if a cluster indicator 854 is in a predict state, the code trace data record circuit 224 records the prediction match count 850 in the code trace data 242(0)-242(X) corresponding to the next branch instruction 204D in the code trace data record 240 and resets the prediction match count 850 to zero (0) (block 830 in Figure 8). The cluster indicator 854 will be in a predict state if the previous branch instruction 204D predicted was correctly predicted. Thus, if the decision of block 282 in Figure 8 is no, this means a cluster of consecutive correctly predicted branch instruction 204D has ended by the misprediction of the next branch instruction 204D. The cluster indicator 854 is now set to a mispredict state (block 832 in Figure 8). A match count is added to the misprediction error count 852 based on the mispredicted branch instruction determined in block 828 (block 834 in Figure 8), and the process repeats back to block 824.

With continuing reference to Figure 8, if in block 828, the next predicted branch behavior 238 of the executed next branch instruction 204D matched the resolved branch behavior 227, if the cluster indicator 854 is in a mispredict state, the code trace data record circuit 224 records the misprediction error count 852 in the code trace data 242(0)-242(X) corresponding to the next branch instruction 204D in the code trace data record 240 and resets the misprediction error count 852 to zero (0) (block 836 in Figure 8). The cluster indicator 854 will be in a mispredict state if the previous branch instruction 204D predicted was mispredicted. Thus, if the decision of block 282 in Figure 8 is yes, this means a cluster of consecutive mispredicted branch instructions 204D has ended by the correct prediction of the next branch instruction 204D. The cluster indicator 854 is now set to a predict state (block 838 in Figure 8). A match count is added to the prediction match count 850 (block 840 in Figure 8), and the process repeats back to block 824.

Note that in the cluster prediction scheme discussed above in Figure 8, a match / error count is updated for every correct prediction or misprediction. Further note that for every change from a correct prediction to a misprediction, there is additional overhead and changing the state of cluster indicator 854 and recording either the prediction match count 850 or misprediction error count 852. If there are instances of a large number of consecutive correct predictions or mispredictions, the amount of overhead the cluster prediction scheme may be worth the tradeoff to achieve greater compression. However, if there are instances in a program code where there are not large numbers of consecutive correct predictions or mispredictions, less compression will be achieved. For example, if there is a back and forth of correct prediction, misprediction, correct prediction, misprediction, a count is still recorded for each situation, but with having incurred the overhead of counting, changing cluster state, and recording count. However, in other prior encoding schemes discussed above, a single bit, for example, could be used to encode only the mispredictions.

Thus, in another example, the cluster prediction scheme of Figure 8 can be selectively used to maximize compression when a high degree of consecutive correct predictions or mispredictions occurs. For example, if a program code has a series of back and forth correct predictions and mispredictions, the code trace data record circuit 224 can be configured to selectively not employ the cluster prediction scheme of Figure 8 to avoid the overhead versus not obtaining enough benefit from compression.

In another example, a scheme of the code trace data record circuit 224 counting and recording behind can be implemented in the cluster prediction scheme, such as in Figure 8, to allow the benefit of clustering if useful and to avoid the overhead of clustering if not useful. In this regard, for example, assume fifteen (15) correct predictions are made, followed by five (5) mispredictions, followed then by another correct prediction. The fifteen (15) correct predictions are counted. Then, when the misprediction is encountered, the number of mispredictions can start to be counted. In this example, five (5) consecutive mispredictions are counted. When a next correct prediction is encountered, the first misprediction among the previous five (5) consecutive mispredictions, code trace data record circuit 224 can be inserted from the code flow data 230 without being included in a cluster count, such as with a single bit of information as previously described in other encoding schemes. Thus, the code trace data record circuit 224 is configured to record the code flow data 230 behind the occurrence of predictions. This allows the code trace data record circuit 224 to identify the first misprediction in a sequence of mispredictions and record it without having to include in a cluster if desired. So, for example, if there were not five (5) consecutive mispredictions, but just one (1), the code trace data record circuit 224 could be configured to omit the misprediction from a cluster. Also, the code trace data record circuit 224 could be configured to record more than one misprediction following a correct prediction, before a misprediction cluster is established.

Thus, this is a way for the code trace data record circuit 224 to use different encoding schemes to record clusters or not include mispredictions in a cluster depending on how many consecutive occurrences occur to maximize compression from clustering where useful and to not employ clustering when not useful for compression. The code trace data record circuit 224 can record the prediction match count 850 and misprediction error count 852 on transitions, for example, from mispredicting to record the number of correct predictions before the first misprediction of a cluster and the number of mispredictions after a cluster. As with many other logging strategies, it is acceptable to log code trace data entries in a code trace data record slightly out of order as long as the max skid is known. This allows logging strategies that do favor code trace data entry filling, for example, that fill code trace data entries of branch taken / non-taken before adding an entry for which a branch prediction strategy was used, when it mispredicted, etc.

It is also possible for the code trace data record circuit 224 to decide which of the code flow data implicit encoding schemes in Figures 6-8 will record the code trace data 228 on a case-by-case basis after a branch is taken from a branch instruction 204D. However, it also possible for a fixed encoding scheme to be used by the code trace data record circuit 224 to record code trace data 228.

Further, it is possible to have several branch prediction strategies in the tracer, as long as there is a way for the consumer of the trace to identify which is the one the record side used. An easy way to identify the strategy is to explicitly identify it in the trace, or to identify the used strategy if is different from the default one.

For example, for indirect jumps, the default strategy of predicting the last branch target from the same location is used, there are also alternate strategies to pick the second from last jump target, the third from last jump target and so on. In this case, the trace would contain the jump target if none of the strategies worked; it would contain no data if the last jump target is the correct one and it would contain information indicating which alternate strategy was used if it found that the jump target was the second or third form last jump target (for example). Indirect branch targets can be known to correlate with the taken/not-taken outcome of preceding branches, which opens more opportunities for encodings and bit savings.

Figure 9 is a block diagram of an exemplary processor-based system 900 that includes a processor 902 (e.g., a microprocessor) that includes an instruction processing circuit 904 for processing and executing instructions. The processor 902 can include a code trace circuit 906 configured to record resolved branch behavior of branch instructions having an execution determinable branch behavior in code flow data of recorded code trace data if predicted branch behavior of the branch instruction does not match resolved branch behavior of the branch instruction from its execution in the instruction processing circuit 904. The code trace circuit 906 can also include a code flow branch prediction circuit 908 that is configured to predict the branch behavior of a branch instruction as predicted branch behavior and provide the predicted branch behavior to the code trace circuit 906 to determine if a branch misprediction occurred for the branch instruction. The code trace circuit 906 is also configured to not record the resolved branch behavior for the branch instruction in code flow data in the recorded code trace data if predicted branch behavior of the branch instruction matches the resolved branch behavior of the branch instruction from its execution. For example, the processor 902 in Figure 9 could be the processor 102 or a CPU 112 in Figure 1 that includes the instruction processing circuit 200. The code trace circuit 606 can be the code trace circuit 118 in a CPU 112 in Figures 1, 2, and 4. The code flow branch prediction circuit 906 can be the code flow branch prediction circuit 234 in Figures 2 and 4.

The processor-based system 900 may be a circuit or circuits included in an electronic board card, such as a printed circuit board (PCB), a server, a personal computer, a desktop computer, a laptop computer, a personal digital assistant (PDA), a computing pad, a mobile device, or any other device, and may represent, for example, a server, or a user's computer. In this example, the processor-based system 900 includes the processor 902. The processor 902 represents one or more general-purpose processing circuits, such as a microprocessor, central processing unit, or the like. More particularly, the processor 902 may be an EDGE instruction set microprocessor, or other processor implementing an instruction set that supports explicit consumer naming for communicating produced values resulting from execution of producer instructions. The processor 902 is configured to execute processing logic in instructions for performing the operations and steps discussed herein. Fetched or prefetched instructions from a memory, such as from a system memory 910 over a system bus 912, are stored in an instruction cache 909. The instruction processing circuit 904 is configured to process instructions fetched into the instruction cache 909 and process the instructions for execution.

The processor 902 and the system memory 910 are coupled to the system bus 912 and can intercouple peripheral devices included in the processor-based system 900. As is well known, the processor 902 communicates with these other devices by exchanging address, control, and data information over the system bus 912. For example, the processor 902 can communicate bus transaction requests to a memory controller 914 in the system memory 910 as an example of a slave device. Although not illustrated in Figure 9, multiple system buses 912 could be provided, wherein each system bus constitutes a different fabric. In this example, the memory controller 914 is configured to provide memory access requests to a memory array 916 in the system memory 910. The processor 902 may be configured to store code flow data generated by the code trace data record circuit 906 in the system memory 910. The memory array 916 is comprised of an array of storage bit cells for storing data. The system memory 910 may be a read-only memory (ROM), flash memory, dynamic random access memory (DRAM), such as synchronous DRAM (SDRAM), etc., and a static memory (e.g., flash memory, static random access memory (SRAM), etc.), as non-limiting examples.

Other devices can be connected to the system bus 912. As illustrated in Figure 9, these devices can include the system memory 910, one or more input device(s) 918, one or more output device(s) 920, a modem 922, and one or more display controllers 924, as examples. The input device(s) 918 can include any type of input device, including but not limited to input keys, switches, voice processors, etc. The output device(s) 920 can include any type of output device, including but not limited to audio, video, other visual indicators, etc. The modem 922 can be any device configured to allow exchange of data to and from a network 926. The network 926 can be any type of network, including but not limited to a wired or wireless network, a private or public network, a local area network (LAN), a wireless local area network (WLAN), a wide area network (WAN), a BLUETOOTH^{™} network, and the Internet. The modem 922 can be configured to support any type of communications protocol desired. The processor 902 may also be configured to access the display controller(s) 924 over the system bus 912 to control information sent to one or more displays 928. The display(s) 928 can include any type of display, including but not limited to a cathode ray tube (CRT), a liquid crystal display (LCD), a plasma display, etc.

The processor-based system 900 in Figure 9 may include a set of instructions 930 to be executed by the processor 902 for any application desired according to the instructions. The instructions 930 may be stored in the system memory 910, processor 902, and/or instruction cache 909 as examples of a non-transitory computer-readable medium 932. The instructions 930 may also reside, completely or at least partially, within the system memory 910 and/or within the processor 902 during their execution. The instructions 930 may further be transmitted or received over the network 926 via the modem 922, such that the network 926 includes the non-transitory computer-readable medium 932.

While the non-transitory computer-readable medium 932 is shown in an exemplary embodiment to be a single medium, the term "computer-readable medium" should be taken to include a single medium or multiple media (e.g., a centralized or distributed database, and/or associated caches and servers) that stores the one or more sets of instructions. The term "computer-readable medium" shall also be taken to include any medium that is capable of storing, encoding, or carrying a set of instructions for execution by the processing device and that causes the processing device to perform any one or more of the methodologies of the embodiments disclosed herein. The term "computer-readable medium" shall accordingly be taken to include, but not be limited to, solid-state memories, optical medium, and magnetic medium.

Note that a code replay processor-based system 934 like the processor-based system 900 in Figure 9 and described above could also be provided in as a separate code replay processor-based system 934 as a debugging or code replay device that has a processor 936 configured to replay the execution of program code according to the recorded code flow data recorded by the code trace circuit 906 in processor-based system 900. This code replay processor-based system 934 and processor 936 could include the same elements as processor-based system 900 and processor 902 described above, but the processor 936 may not include the code trace data record circuit 906. The processor 936 of the code replay processor-based system 934 could include the code flow branch prediction circuit 908 or similar circuit to be able to determine the code flow from the recorded code flow data.

The embodiments disclosed herein include various steps. The steps of the embodiments disclosed herein may be formed by hardware components or may be embodied in machine-executable instructions, which may be used to cause a general-purpose or special-purpose processor programmed with the instructions to perform the steps. Alternatively, the steps may be performed by a combination of hardware and software.

The embodiments disclosed herein may be provided as a computer program product, or software, that may include a machine-readable medium (or computer-readable medium) having stored thereon instructions, which may be used to program a computer system (or other electronic devices) to perform a process according to the embodiments disclosed herein. A machine-readable medium includes any mechanism for storing or transmitting information in a form readable by a machine (e.g., a computer). For example, a machine-readable medium includes: a machine-readable storage medium (e.g., ROM, random access memory ("RAM"), a magnetic disk storage medium, an optical storage medium, flash memory devices, etc.); and the like.

Unless specifically stated otherwise and as apparent from the previous discussion, it is appreciated that throughout the description, discussions utilizing terms such as "processing," "computing," "determining," "displaying," or the like, refer to the action and processes of a computer system, or similar electronic computing device, that manipulates and transforms data and memories represented as physical (electronic) quantities within the computer system's registers into other data similarly represented as physical quantities within the computer system memories or registers or other such information storage, transmission, or display devices.

The algorithms and displays presented herein are not inherently related to any particular computer or other apparatus. Various systems may be used with programs in accordance with the teachings herein, or it may prove convenient to construct more specialized apparatuses to perform the required method steps. The required structure for a variety of these systems will appear from the description above. In addition, the embodiments described herein are not described with reference to any particular programming language. It will be appreciated that a variety of programming languages may be used to implement the teachings of the embodiments as described herein.

Those of skill in the art will further appreciate that the various illustrative logical blocks, modules, circuits, and algorithms described in connection with the embodiments disclosed herein may be implemented as electronic hardware, instructions stored in memory or in another computer-readable medium and executed by a processor or other processing device, or combinations of both. The components of the distributed antenna systems described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends on the particular application, design choices, and/or design constraints imposed on the overall system. Skilled artisans may implement the described functionality in varying ways for each particular application, but such implementation decisions should not be interpreted as causing a departure from the scope of the present embodiments.

The various illustrative logical blocks, modules, and circuits described in connection with the embodiments disclosed herein may be implemented or performed with a processor, a Digital Signal Processor (DSP), an Application Specific Integrated Circuit (ASIC), a Field Programmable Gate Array (FPGA), or other programmable logic device, a discrete gate or transistor logic, discrete hardware components, or any combination thereof designed to perform the functions described herein. Furthermore, a controller may be a processor. A processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The embodiments disclosed herein may be embodied in hardware and in instructions that are stored in hardware, and may reside, for example, in RAM, flash memory, ROM, Electrically Programmable ROM (EPROM), Electrically Erasable Programmable ROM (EEPROM), registers, a hard disk, a removable disk, a CD-ROM, or any other form of computer-readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary embodiments herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary embodiments may be combined. Those of skill in the art will also understand that information and signals may be represented using any of a variety of technologies and techniques. For example, data, instructions, commands, information, signals, bits, symbols, and chips, that may be references throughout the above description, may be represented by voltages, currents, electromagnetic waves, magnetic fields, or particles, optical fields or particles, or any combination thereof.

Unless otherwise expressly stated, it is in no way intended that any method set forth herein be construed as requiring that its steps be performed in a specific order. Accordingly, where a method claim does not actually recite an order to be followed by its steps, or it is not otherwise specifically stated in the claims or descriptions that the steps are to be limited to a specific order, it is in no way intended that any particular order be inferred.

It will be apparent to those skilled in the art that various modifications and variations can be made without departing from the spirit or scope of the invention. Since modifications, combinations, subcombinations and variations of the disclosed embodiments incorporating the spirit and substance of the invention may occur to persons skilled in the art, the invention should be construed to include everything within the scope of the appended claims and their equivalents.

## Claims

1. A processor, comprising:
an instruction processing circuit, comprising:
an instruction fetch circuit configured to fetch a plurality of instructions from a program code into an instruction stream to be executed, the plurality of instructions comprising a branch instruction having an execution determinable branch behavior; and
an execution circuit configured to execute the branch instruction to generate a resolved branch behavior of the branch instruction;
the processor configured to:
predict a branch behavior of the branch instruction executed in the execution circuit to generate a predicted branch behavior of the branch instruction;
determine if the predicted branch behavior of the branch instruction matches the resolved branch behavior of the branch instruction; and
in response to the predicted branch behavior not matching the resolved branch behavior, record resolved branch information for the resolved branch behavior in a code trace data entry for the branch instruction among a plurality of code trace data record entries in a code trace data record.

2. The processor of claim 1, wherein the processor is further configured to:
in response to the resolved branch behavior of the branch instruction matching the predicted branch behavior, not record the resolved branch information for the resolved branch behavior in the code trace data for the branch instruction in the code trace data record.

3. The processor of claim 1 further configured to:
determine if the predicted branch behavior of the branch instruction results in prediction training; and
in response to the predicted branch behavior of the branch instruction not matching the resolved branch behavior, the processor further configured to:
in response to the predicted branch behavior of the branch instruction resulting in prediction training, record a training indicator in the resolved branch information indicating prediction training in the code trace data entry for the branch instruction in the code trace data record.

4. The processor of claim 1 further configured to:
determine if the branch instruction comprises a conditional branch instruction comprising a predicate condition;
in response to the branch instruction comprising the conditional branch instruction:
the execution circuit configured to execute the conditional branch instruction to generate the resolved branch behavior comprising a resolved branch taken indicator of the conditional branch instruction; and
the processor configured to predict a branch behavior comprising a branch taken indicator for the conditional branch instruction; and
in response to the predicted branch behavior of the branch instruction not matching the resolved branch behavior, the processor further configured to:
in response to the branch instruction comprising the conditional branch instruction, record the branch taken indicator in the resolved branch information in the code trace data entry for the branch instruction in the code trace data record.

5. The processor of claim 1 further configured to:
determine if the branch instruction comprises an indirect branch instruction comprising an indirect branch target;
in response to the branch instruction comprising the indirect branch instruction, predict a branch behavior comprising an indirect branch target address for the branch instruction based on the an indirect branch target; and
in response to the predicted branch behavior of the branch instruction not matching the resolved branch behavior, the processor further configured to:
in response to the branch instruction comprising the indirect branch instruction, record the indirect branch target in the resolved branch information in the code trace data for the branch instruction in the code trace data record.

6. The processor of claim 1, wherein:
in response to the resolved branch behavior of the branch instruction not matching the predicted branch prediction behavior, the processor further configured to:
(a) add a match count to a prediction match count;
(b) execute in the execution circuit, a next branch instruction having an execution determinable branch behavior among the plurality of instructions to generate a next resolved branch behavior of the next branch instruction;
(c) predict a next branch behavior of the next branch instruction executed in the execution circuit to generate a next predicted branch behavior of the next branch instruction;
(d) determine if a next predicted branch behavior of the next branch instruction matches the next resolved branch behavior of the next branch instruction; and
(e) in response to the next predicted branch behavior not matching the next resolved branch behavior:
repeat functions (a)-(e); and
in response to the next predicted branch behavior of the next branch instruction matching the next resolved branch behavior of the next branch instruction, record a prediction match count in the resolved branch information indicating a location of the next correctly predicted branch instruction in the program code in a code trace data entry corresponding to the next branch instruction in the code trace data record.

7. The processor of claim 1, wherein the processor is further configured to:
execute, in the execution circuit, a next branch instruction having an execution determinable branch behavior among the plurality of instructions to generate a next resolved branch behavior of the next ranch instruction;
predict a next branch behavior of the next branch instruction executed in the execution circuit to generate a next predicted branch behavior of the next branch instruction;
determine a consecutive number of next predicted branch behaviors of next branch instructions not matching the next resolved branch behavior of the next branch instruction;
record the consecutive number of next predicted branch behaviors of next branch instructions not matching the next resolved branch behavior of the next branch instruction in the code trace data record;
determine a consecutive number of next predicted branch behaviors of next branch instructions matching the next resolved branch behavior of the next branch instruction;
record the consecutive number of next predicted branch behaviors of next branch instructions matching the next resolved branch behavior of the next branch instruction in the code trace data record.

8. The processor of claim 1, wherein the processor is further configured to:
initialize a prediction match count;
initialize a misprediction error count;
(a) execute, in the execution circuit, a next branch instruction having an execution determinable branch behavior among the plurality of instructions to generate a next resolved branch behavior of the next ranch instruction;
(b) predict a next branch behavior of the next branch instruction executed in the execution circuit to generate a next predicted branch behavior of the next branch instruction;
(c) determine if the next predicted branch behavior of the next branch instruction matches the next resolved branch behavior of the next branch instruction; and
(d) in response to the next predicted branch behavior not matching the next resolved branch behavior, the processor further configured to:
in response to a cluster indicator being in a predict state:
record the prediction match count in a code trace data entry corresponding to the branch instruction in the code trace data record; and
initialize the prediction match count;
add an error count to the misprediction error count; and
repeat functions (a)-(d);
(e) in response to the next predicted branch behavior matching the next resolved branch behavior, the processor further configured to:
in response to a cluster indicator being in a mispredict state:
record the misprediction error count in a code trace data entry corresponding to the branch instruction in the code trace data record; and
initialize the misprediction error count;
add a match count to the prediction match count; and
repeat functions (a)-(e).

9. The processor of claim 1, wherein:
the instruction processing circuit is further configured to generate instruction information comprising the branch instruction and the resolved branch behavior of the branch instruction;
the processor further comprising:
a code trace data record circuit coupled to the instruction processing circuit;
the code trace data record circuit configured to:
receive the instruction information;
determine if the predicted branch behavior of the branch instruction matches the resolved branch behavior of the branch instruction; and
in response to the predicted branch behavior of the branch instruction not matching the resolved branch behavior, record the resolved branch information for the resolved branch behavior in the code trace data entry for the branch instruction among the plurality of code trace data record entries in the code trace data record.

10. The processor of claim 9, wherein:
the code trace data record circuit is further configured to generate branch instruction information comprising the branch instruction from the received instruction information;
the processor further comprising:
a code flow branch prediction circuit coupled to the code trace data record circuit;
the code flow branch prediction circuit configured to:
predict a branch behavior of the branch instruction in the instruction information executed in the execution circuit to generate a predicted branch behavior of the branch instruction.

11. The processor of claim 10 configured to predict the branch behavior of the branch instruction executed in the execution circuit as branch taken to generate the predicted branch behavior of the branch instruction as branch taken.

12. The processor of claim 10 configured to predict the branch behavior of the branch instruction executed in the execution circuit as branch not taken to generate the predicted branch behavior of the branch instruction as branch not taken.

13. A method of encoding code trace data for executed instructions in a processor, comprising:
fetching a plurality of instructions from a program code into an instruction stream to be executed, the plurality of instructions comprising a branch instruction having an execution determinable branch behavior; and
executing the branch instruction to generate a resolved branch behavior of the branch instruction;
predicting a branch behavior of the executed branch instruction to generate a predicted branch behavior of the branch instruction;
determining if the predicted branch behavior to generate a predicted branch behavior of the branch instruction matches the resolved branch behavior of the branch instruction; and
in response to determining the predicted branch behavior does not match the resolved branch behavior, recording resolved branch information for the resolved branch behavior in a code trace data entry for the branch instruction among a plurality of code trace data record entries in a code trace data record.

14. The method of claim 13, further comprising not recording resolved branch information for the resolved branch behavior in the code trace data entry for the branch instruction in the code trace data record, in response to the resolved branch behavior of the branch instruction matching the predicted branch behavior.

15. The method of claim 13, further comprising, in response to the predicted branch behavior of the branch instruction not matching the resolved branch behavior:
determining if the predicted branch behavior of the branch instruction results in prediction training; and
recording a training indicator in the resolved branch information indicating prediction training in the code trace data entry for the branch instruction in the code trace data record, in response to the predicted branch behavior of the branch instruction resulting in prediction training.

16. The method of claim 13 further comprising:
determining if the branch instruction comprises a conditional branch instruction comprising a predicate condition;
in response to determining the branch instruction comprises the conditional branch instruction:
executing the conditional branch instruction to generate the resolved branch behavior comprising a resolved branch taken indicator of the conditional branch instruction; and
predicting the branch behavior comprising a branch taken indicator for the conditional branch instruction; and
in response to the determining the predicted branch behavior of the conditional branch instruction does not match the resolved branch behavior, further comprising:
recording the branch taken indicator in the resolved branch information in the code trace data entry for the conditional branch instruction in the code trace data record.

17. The method of claim 13 further comprising:
determining if the branch instruction comprises an indirect branch instruction comprising an indirect branch target;
in response to determining the branch instruction comprises the indirect branch instruction, predict the branch behavior comprising an indirect branch target address for the branch instruction based on a the indirect branch target; and
in response to determining the predicted branch behavior of the branch instruction not does not match the resolved branch behavior, further comprising:
recording the indirect branch target in the resolved branch information in the code trace data entry for the branch instruction in the code trace data record, in response to the branch instruction comprising the indirect branch instruction.

18. The method of claim 13, further comprising, in response to the resolved branch behavior of the branch instruction not matching the predicted branch behavior:
(a) adding a match count to a prediction match count;
(b) executing a next branch instruction having an execution determinable branch behavior among the plurality of instructions to generate a next resolved branch behavior of the next branch instruction;
(c) predicting a next branch behavior of the executed next branch instruction to generate a next predicted branch behavior of the next branch instruction;
(d) determining if a next predicted branch behavior of the next branch instruction matches the next resolved branch behavior of the next branch instruction; and
(e) in response to the next predicted branch behavior not matching the next resolved branch behavior:
repeating functions (a)-(e); and
in response to the next predicted branch behavior of the next branch instruction matching the next resolved branch behavior of the next branch instruction, recording a prediction match count in the resolved branch information indicating a location of the next correctly predicted branch instruction in the program code in a code trace data entry corresponding to the next conditional branch instruction in the code trace data record.

19. The processor of claim 13, further comprising:
executing, in the execution circuit, a next branch instruction having an execution determinable branch behavior among the plurality of instructions to generate a next resolved branch behavior of the next ranch instruction;
predicting a next branch behavior of the next branch instruction executed in the execution circuit to generate a next predicted branch behavior of the next branch instruction;
determining a consecutive number of next predicted branch behaviors of next branch instructions not matching the next resolved branch behavior of the next branch instruction;
recording the consecutive number of next predicted branch behaviors of next branch instructions not matching the next resolved branch behavior of the next branch instruction in the code trace data record;
determining a consecutive number of next predicted branch behaviors of next branch instructions matching the next resolved branch behavior of the next branch instruction;
recording the consecutive number of next predicted branch behaviors of next branch instructions matching the next resolved branch behavior of the next branch instruction in the code trace data record.

20. The method of claim 13, further comprising:
initializing a prediction match count;
initializing a misprediction error count;
(a) executing a next branch instruction having an execution determinable branch behavior among the plurality of instructions to generate a next resolved branch behavior of the next ranch instruction;
(b) predicting a next branch behavior of the next branch instruction executed in the execution circuit to generate a next predicted branch behavior of the next branch instruction;
(c) determining if the next predicted branch behavior of the next branch instruction matches the next resolved branch behavior of the next branch instruction; and
(d) in response to the next predicted branch behavior not matching the next resolved branch behavior:
in response to a cluster indicator being in a predict state:
recording the prediction match count in a code trace data entry corresponding to the branch instruction in the code trace data record; and
initializing the prediction match count;
adding an error count to the misprediction error count; and
repeating functions (a)-(e);
(e) in response to the next predicted branch behavior matching the next resolved branch behavior, the processor further configured to:
in response to a cluster indicator being in a mispredict state:
recording the misprediction error count in a code trace data entry corresponding to the branch instruction in the code trace data record; and
initializing the misprediction error count;
adding a match count to the prediction match count; and
repeating functions (a)-(e).

21. A non-transitory computer-readable medium having stored thereon computer executable instructions which, when executed, cause a processor to:
predict a branch behavior of an executed branch instruction to generate a predicted branch behavior of the branch instruction;
determine if the predicted branch behavior to generate a predicted branch behavior of the branch instruction matches a resolved branch behavior of the branch instruction; and
record resolved branch information for the resolved branch behavior in a code trace data entry for the branch instruction among a plurality of code trace data record entries in a code trace data record, in response to determining the predicted branch behavior does not match the resolved branch behavior.

22. The non-transitory computer-readable medium of claim 21, further comprising computer executable instructions which, when executed, further cause the processor to:
not record the resolved branch information for the resolved branch behavior in the code trace data entry for the branch instruction in the code trace data record, in response to the resolved branch behavior of the branch instruction matching the predicted branch behavior.
